# EUROPEAN PATENT SPECIFICATION

(11) **EP 2 150 027 B1**
(45) Date of publication and mention of the grant of the patent: **03.09.2014**
(21) Application number: 08161597.3
(22) Date of filing: 31.07.2008
(51) Int. Cl.: H04L 29/08, H04W 8/22

(54) **Systems and methods for preserving auditable records of an electronic device**
Systeme und Verfahren zum Aufbewahren von auditierbaren Aufnahmen auf einer elektronischen Vorrichtung
Systèmes et procédés pour préserver des logs auditables d'un dispositif électronique

(43) Date of publication of application: 03.02.2010
(73) Proprietor: BlackBerry Limited, Waterloo, ON N2K 0A7 (CA)
(72) Inventor: Brown, Michael K, Fergus Ontario N1M 2Z5 (CA); Totzke, Scott, Waterloo Ontario N2K 3Y5 (CA); Manea, Radu Alexandru, Toronto Ontario M9C 4H9 (CA)
(74) Representative: Moore, Barry

(56) References cited:
- WO-A-02/12985
- US-A1- 2005 283 356
- US-A1- 2007 077 925
- US-A1- 2008 115 226
- DATABASE WPI Week 200882 Thomson Scientific, London, GB; AN 2008-O14338 XP002520488 -& KR 2008 061 584 A (SAMSUNG ELECTRONICS CO LTD [KR]) 3 July 2008 (2008-07-03)

## Description

Embodiments described herein relate generally to the communication of messages (e.g. SMS, MMS, Peer-to-Peer, IM, ICQ and PIN messages) between users of mobile devices.

For many messaging applications, it is beneficial to track and log messages sent from one communication device to another. In the case of mobile communication devices used to send SMS, MMS, Peer-to-Peer, IM, ICQ and PIN, and other electronic messages, the log data records corresponding to messages sent and received are typically stored locally on the device. Such log data records may be periodically uploaded to a centralized and networked log database.

US-A-2005/283356 discloses a data management method between a mass storage device and a data capture/storage device. When the data capture/storage device is connected to the mass storage device, a connection signal is generated. The connection signal initiates the transfer of data files from the data capture/storage device to the mass storage device. Then, a first marker is added to the data files in the data capture/storage device, so the transferred data files can be differentiated from the not-yet transferred.

WO-A-0212985 discloses a system in which a copy of personal data is stored on a database server and data on a personal data device and the data on the database server is mutually updated and synchronised by communications over a communications network. A facility is supplied to delete the personal data stored on the personal data device when attempts are made by an unauthorised user to use the personal data device. The personal data may subsequently be reloaded into the personal data device, or into a replacement personal data device, from the database server.

KR-A-20080703 discloses a device having a memory unit with a backup information table and a controller of data file delete control device. The controller confirms whether the backup existence and non-existence information of the data file is required to delete through the backup information table.

US 2008/115226 discloses client device may be managed in the event of, for example, device loss or mislocation. In such a case, a user can effectively cause a restriction command to be generated, where the restriction command is wirelessly transmitted to the client device. The restriction command can be either lock user data on the client device or erase user data on the client device.

The invention is defined in independent claims 1, 5 and 6.

### Brief Description of the Drawings

For a better understanding of embodiments of the systems and methods described herein, and to show more clearly how they may be carried into effect, reference will be made, by way of example, to the accompanying drawings in which:
FIG. 1 is a block diagram of a mobile device in one example implementation;
FIG. 2 is a block diagram of a communication subsystem component of the mobile device of FIG. 1;
FIG. 3 is a block diagram of a node of a wireless network;
FIG. 4 is a block diagram illustrating components of a host system in one example configuration; and
FIG. 5 is a flowchart illustrating a method of preserving auditable records of an electronic device.

### Description of Preferred Embodiments

The applicants have recognized that, in between the time an electronic message is sent and when the message logs are uploaded to the central log database, a user may delete the message logs (for instance in the event an inappropriate message has been sent). This presents a potential security loophole. Accordingly, in one broad aspect, there may be provided a method for preserving data records of a system comprising a mobile electronic device and a remote log storage configured to store data records corresponding to auditable events. The mobile electronic device may comprise memory storage configured to store user data and the user data includes a data log comprising data records corresponding to one or more auditable events. As well, the mobile electronic device may be operatively coupleable to the remote log storage. The method may comprise receiving a command to delete the user data; identifying any data records in the data log which have not been uploaded to the remote log storage; storing any identified data records to the remote log storage; and deleting the user data.

In some embodiments, the method may further comprise operatively coupling the mobile electronic device to the remote log storage prior to storing the identified data records to the remote log storage. The operative coupling may comprise establishing a communication link between the electronic device and the remote log storage. As well, the remote log storage may be operatively coupled to a communications network.

The mobile electronic device may comprise a communication module configured to send and/or receive messages, and the one or more auditable events may comprise the sending and/or receiving of a message. The sent or received message may be selected from the group consisting of SMS, MMS, Peer-to-Peer, IM, ICQ and PIN messages. The one or more auditable events may also comprise a phone call or push-to-talk communication. The one or more auditable events may also comprise uploading or downloading files. The one or more auditable events may also comprise use of predetermined applications.

A computer-readable medium may be provided which comprises instructions executable on a processor of the computing device for implementing the method.

A mobile electronic device may also be provided on which an application executes, wherein the application is programmed to perform the method.

In yet another aspect a mobile electronic device may be provided. The preferred device comprises a communication module; a memory configured to store a data log; a logging module operatively coupled to the communication module, wherein the logging module is configured to store, in the data log, data records corresponding to one or more auditable events; wherein the communication module is configured to output the data records; and a deletion module configured to delete data records stored in the data log; wherein the deletion module is configured to determine if any data records exist which have not been output; wherein the communication module is configured to output the data records by storing the data records to a remote log storage means; wherein the deletion module is configured to determine if any data records exist which have not been uploaded to the remote log storage means; wherein upon receipt of an erase command, the deletion module is further configured to cause the non-uploaded data records to be uploaded to the remote log storage means.

The communication module may be configured to establish a communication link with the remote log storage. As well, the remote log storage may be operatively coupled to a communications network. The communication module may be configured to send and receive messages, and wherein the auditable events comprise the sending or receiving of a message. Such sent or received message may be selected from the group consisting of SMS, MMS, Peer-to-Peer, IM, ICQ and PIN messages. The one or more auditable events may also comprise a phone call or push-to-talk communication. The one or more auditable events may also comprise uploading or downloading files. The one or more auditable events may also comprise use of predetermined applications.

The communication module may be configured to send and/or receive messages, and the one or more auditable events may comprise the sending and/or receiving of a message. The data records may comprise data corresponding to the contents of, or a copy of, a message.

These and other aspects and features of various embodiments will be described in greater detail below.

Embodiments described herein make reference to a mobile device. A mobile device generally includes a two-way communication device with advanced data communication capabilities having the capability to communicate with other computer systems. A mobile device may also include the capability for voice communications. Depending on the functionality provided by a mobile device, it may be referred to as a data messaging device, a two-way pager, a cellular telephone with data messaging capabilities, a wireless Internet appliance, or a data communication device (with or without telephony capabilities). A mobile device communicates with other devices through a network of transceiver stations.

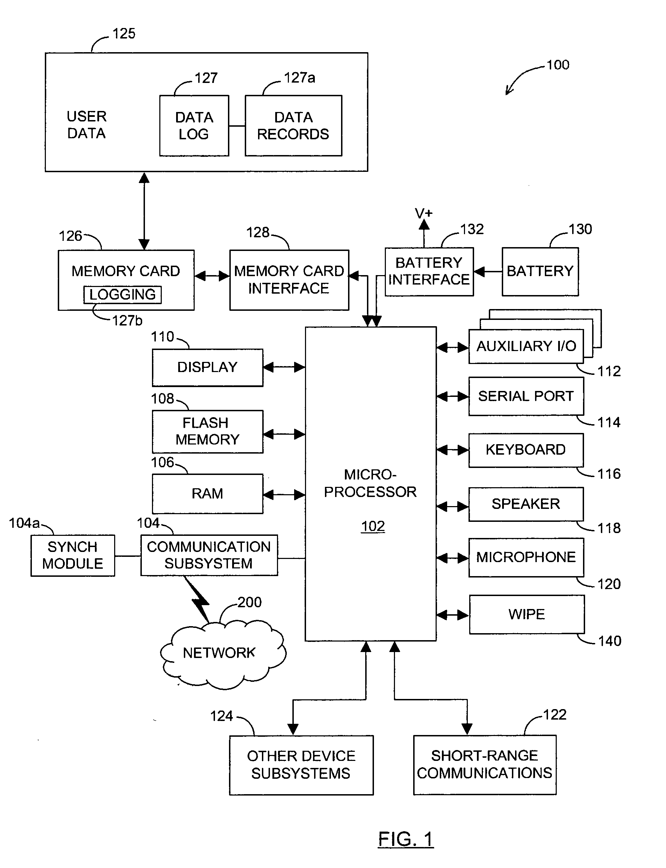

To aid the reader in understanding the structure of a mobile device and how it communicates with other devices, reference is made to FIGS. 1 through 3.

Referring first to FIG. 1, a block diagram of a mobile device in one example implementation is shown generally as 100. Mobile device 100 comprises a number of components, the controlling component being microprocessor 102. Microprocessor 102 controls the overall operation of mobile device 100. Communication functions, including data and voice communications, are performed through communication subsystem 104. Communication module or subsystem 104 receives messages from and sends messages to a wireless network 200. In this example implementation of mobile device 100, communication subsystem 104 is configured in accordance with the Global System for Mobile Communication (GSM) and General Packet Radio Services (GPRS) standards. The GSM/GPRS wireless network is used worldwide and it is expected that these standards may be supplemented or eventually superseded by newer standards such as Enhanced Data GSM Environment (EDGE) and Universal Mobile Telecommunications Service (UMTS), High-Speed Packet Access (HSPA), and Ultra Mobile Broadband (UMB), etc. New standards are still being defined, but it is believed that they will have similarities to the network behaviour described herein, and it will also be understood by persons skilled in the art that the invention is intended to use any other suitable standards that are developed in the future. The wireless link connecting communication subsystem 104 with network 200 represents one or more different Radio Frequency (RF) channels, operating according to defined protocols specified for GSM/GPRS communications. With newer network protocols, these channels are capable of supporting both circuit switched voice communications and packet switched data communications.

Although the wireless network associated with mobile device 100 is a GSM/GPRS wireless network in one example implementation of mobile device 100, other wireless networks may also be associated with mobile device 100 in variant implementations. Different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) networks, CDMA2000 networks, Evolution Data Only (EV-DO) networks, GSM/GPRS networks (as mentioned above), and third-generation (3G) and beyond networks like EDGE, UMTS, and HSPA, etc. Some older examples of data-centric networks include the Mobitex^{™} Radio Network and the DataTAC^{™} Radio Network. Examples of older voice-centric data networks include Personal Communication Systems (PCS) networks like GSM and Time Division Multiple Access (TDMA) systems.

Microprocessor 102 also interacts with additional subsystems such as a Random Access Memory (RAM) 106, and flash memory 108. The microprocessor 102 may also be coupled to a display 110, auxiliary input/output (I/O) subsystem 112, serial port 114, keyboard 116, speaker 118, and microphone 120 may also be provided. Similarly, short-range communications subsystem 122 and other subsystems 124 may further be provided.

Some of the subsystems of mobile device 100 perform communication-related functions, whereas other subsystems may provide "resident" or on-device functions. By way of example, display 110 and keyboard 116 may be used for both communication-related functions, such as entering a text message for transmission over network 200, and device-resident functions such as a calculator or task list. Operating system software used by microprocessor 102 is typically stored in a persistent store such as flash memory 108, which may alternatively be a read-only memory (ROM) or similar storage element (not shown). Those skilled in the art will appreciate that the operating system, specific device applications, or parts thereof, may be temporarily loaded into a volatile store such as RAM 106.

Mobile device 100 may send and receive communication signals over network 200 after required network registration or activation procedures have been completed. Network access is associated with a subscriber or user of a mobile device 100. To identify a subscriber, mobile device 100 may provide for a memory card 126, such as a Subscriber Identity Module or "SIM" card to be inserted in a Memory card interface 128 in order to communicate with a network. memory card 126 is one type of a conventional "smart card" used to identify a subscriber of mobile device 100 and to personalize the mobile device 100, among other things. Without memory card 126, mobile device 100 may not be fully operational for communication with network 200. Alternatively, by way of example only, other types of "smart cards" which might be used may include an R-UIM (removable user identity module) or a CSIM (CDMA (code division multiple access) subscriber identity module) or a USIM (universal subscriber identity module) card. By inserting memory card 126 into Memory card interface 128, a subscriber can access all subscribed services. Services may include without limitation: web browsing and messaging such as e-mail, voice mail, Short Message Service (SMS), Multimedia Messaging Services (MMS), and Peer-to-Peer messages such as PIN-to-PIN messages which may also be referred to simply as PIN messages. As used in this context, a PIN (product identification number) generally refers to a number that uniquely identifies the mobile device 100, and a PIN message generally refers to a message addressed to one or more PIN numbers. More advanced services may include without limitation: point of sale, field service and sales force automation. Memory card 126 includes a processor and memory for storing information. Once memory card 126 is inserted in memory card interface 128, it is coupled to microprocessor 102. In order to identify the subscriber, memory card 126 contains some user parameters such as an International Mobile Subscriber Identity (IMSI). An advantage of using memory card 126 is that a subscriber is not necessarily bound by any single physical mobile device.

Memory card 126 may store additional subscriber information and user data 125 for a mobile device as well, including datebook (or calendar) information and a data log 127 of data records 127a corresponding to recent message and call information. Such data records 127a may track auditable events local to the device 100 (and which typically involve communications or other messages which are routed through the corporate network, such as LAN 250). Such message types, for example, may include SMS (Short Messaging Service), MMS (Multimedia Messaging Service), Peer-to-Peer, IM (Instant Messaging), ICQ and PIN messages. In certain applications, the data records 127a may include copies of the messages sent or received. The auditable events stored in the log 127 and data records 127a may also include data corresponding to phone calls (eg. date and time of a call and third party phone number(s) participating in the phone call), "push-to-talk" communications and GPS tracking data. The auditable events may also include data corresponding to URLs, or other data relating to websites visited (and/or files uploaded or downloaded), using certain predetermined applications (for example, online or installed on the device 100) such as FACEBOOK^{tm} ,FLICKR^{tm} or games. The memory card 126 may include a logging module 127b operatively coupled to the communication module 104 and programmed to store such data records 127a in the data log 127. The user data 125 and data log 127 may reside in whole or in part on the memory card 126 or in other appropriate storage typically resident on the device 100.

Mobile device 100 may be a battery-powered device and may include a battery interface 132 for receiving one or more rechargeable batteries 130. Battery interface 132 may be coupled to a regulator (not shown), which assists battery 130 in providing power V+ to mobile device 100. Although current technology makes use of a battery, future technologies such as micro fuel cells may provide the power to mobile device 100. In some embodiments, mobile device may be solar-powered.

Microprocessor 102, in addition to its operating system functions, enables execution of software applications on mobile device 100. A set of applications that control basic device operations, including data and voice communication applications, may be installed on mobile device 100 during its manufacture. Another application that may be loaded onto mobile device 100 is a personal information manager (PIM). A PIM has functionality to organize and manage data items of interest to a subscriber, such as, but not limited to, e-mail, calendar events, voice mails, appointments, and task items. A PIM application has the ability to send and receive data items via wireless network 200. PIM data items may be seamlessly integrated, synchronized, and updated via wireless network 200 with the mobile device subscriber's corresponding data items stored and/or associated with a host computer system. This functionality creates a mirrored host computer on mobile device 100 with respect to such items. This can be particularly advantageous where the host computer system is the mobile device subscriber's office computer system.

Additional applications may also be loaded onto mobile device 100 through network 200, auxiliary I/O subsystem 112, serial port 114, short-range communications subsystem 122, or any other suitable subsystem 124. This flexibility in application installation increases the functionality of mobile device 100 and may provide enhanced on-device functions, communication-related functions, or both. For example, secure communication applications may enable electronic commerce functions and other such financial transactions to be performed using mobile device 100.

Serial port 114 enables a subscriber to set preferences through an external device or software application and extends the capabilities of mobile device 100 by providing for information or software downloads to mobile device 100 other than through a wireless communication network. The alternate download path may, for example, be used to load an encryption key onto mobile device 100 through a direct and thus reliable and trusted connection to provide secure device communication.

Short-range communications subsystem 122 provides for communication between mobile device 100 and different systems or devices, without the use of network 200. For example, subsystem 122 may include an infrared device and associated circuits and components for short-range communication. Examples of short range communication would include standards developed by the Infrared Data Association (IrDA), Bluetooth, and the 802.11 family of standards developed by IEEE.

In use, a received signal such as a text message, an e-mail message, or web page download will be processed by communication subsystem 104 and input to microprocessor 102. Microprocessor 102 will then process the received signal for output to display 110 or alternatively to auxiliary I/O subsystem 112. A subscriber may also compose data items, such as e-mail messages, for example, using keyboard 116 in conjunction with display 110 and possibly auxiliary I/O subsystem 112. Auxiliary subsystem 112 may include devices such as: a touch screen, mouse, track ball, infrared fingerprint detector, or a roller wheel with dynamic button pressing capability. Keyboard 116 may comprise an alphanumeric keyboard and/or telephone-type keypad. Keyboard 116 may comprise a virtual keyboard or a physical keyboard or both. A composed item may be transmitted over network 200 through communication subsystem 104.

For voice communications, the overall operation of mobile device 100 is substantially similar, except that the received signals may be processed and output to speaker 118, and signals for transmission may be generated by microphone 120. Alternative voice or audio I/O subsystems, such as a voice message recording subsystem, may also be implemented on mobile device 100. Although voice or audio signal output is accomplished primarily through speaker 118, display 110 may also be used to provide additional information such as the identity of a calling party, duration of a voice call, or other voice call related information.

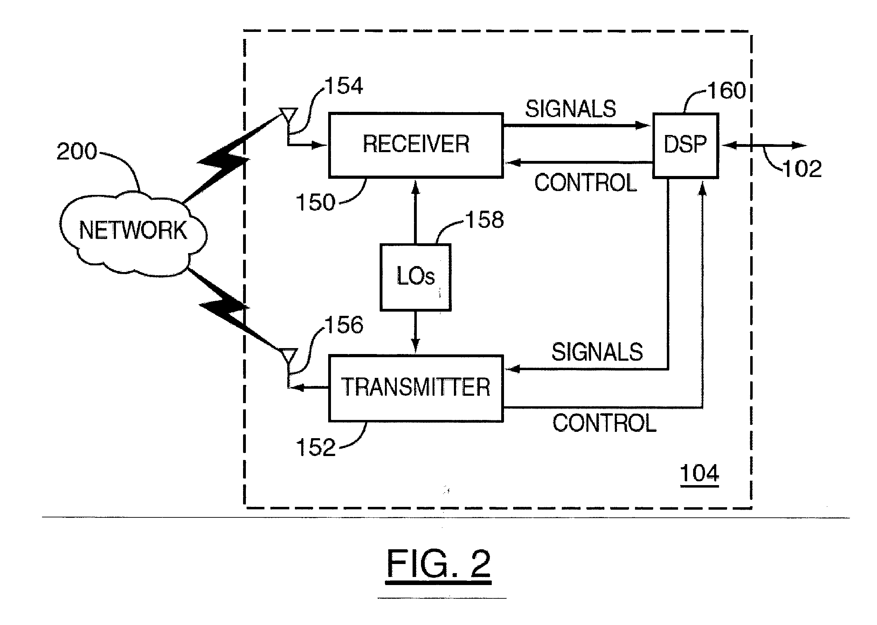

Referring now to FIG. 2, a block diagram of the communication subsystem component 104 of FIG. 1 is shown. Communication subsystem 104 comprises a receiver 150, and a transmitter 152. The subsystem 104 may also be coupled to one or more embedded or internal antenna elements 154, 156, and Local Oscillators (LOs) 158. A processing module such as a Digital Signal Processor (DSP) 160, may also be provided.

The particular design of communication subsystem 104 is dependent upon the network 200 in which mobile device 100 is intended to operate, thus it should be understood that the design illustrated in FIG. 2 serves only as one example. Signals received by antenna 154 through network 200 are input to receiver 150, which may perform such common receiver functions as signal amplification, frequency down conversion, filtering, channel selection, and analog-to-digital (A/D) conversion. A/D conversion of a received signal allows more complex communication functions such as demodulation and decoding to be performed in DSP 160. In a similar manner, signals to be transmitted are processed, including modulation and encoding, by DSP 160. These DSP-processed signals are input to transmitter 152 for digital-to-analog (D/A) conversion, frequency up conversion, filtering, amplification and transmission over network 200 via antenna 156. DSP 160 not only processes communication signals, but also provides for receiver and transmitter control. For example, the gains applied to communication signals in receiver 150 and transmitter 152 may be adaptively controlled through automatic gain control algorithms implemented in DSP 160.

The wireless link between mobile device 100 and a network 200 may contain one or more different channels, typically different RF channels, and associated protocols used between mobile device 100 and network 200. A RF channel is a limited resource that must be conserved, typically due to limits in overall bandwidth and limited battery power of mobile device 100.

When mobile device 100 is fully operational, transmitter 152 may be keyed or turned on only when it is sending to network 200 and may otherwise be turned off to conserve resources. Similarly, receiver 150 may be periodically turned off to conserve power until it is needed to receive signals or information (if at all) during designated time periods.

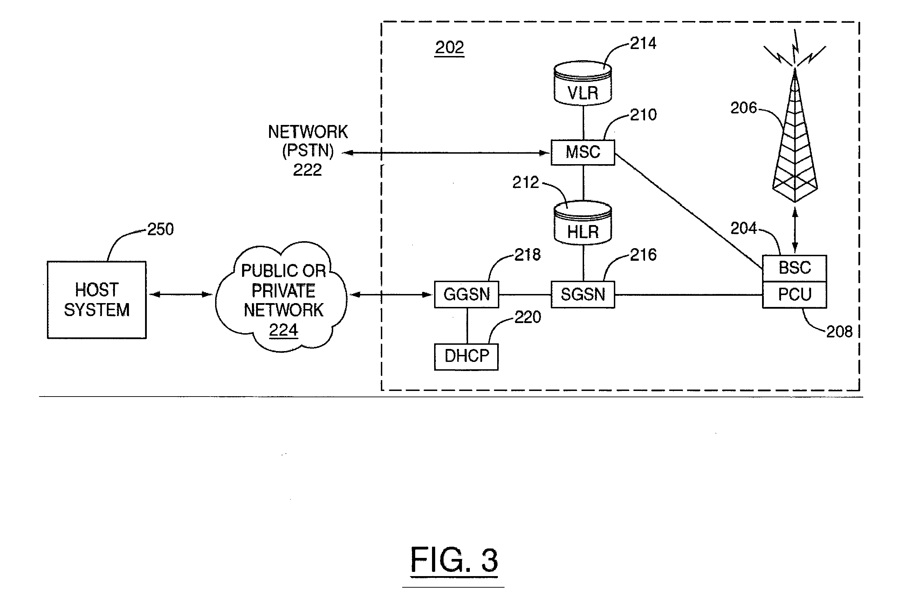

Referring now to FIG. 3, a block diagram of a node of an exemplary wireless network is shown as 202. In practice, network 200 comprises one or more nodes 202. Mobile device 100 communicates with a node 202 within wireless network 200. In the example implementation of FIG. 3, node 202 is configured in accordance with General Packet Radio Service (GPRS) and Global Systems for Mobile (GSM) technologies; however, in other embodiments, different standards may be implemented as discussed in more detail above. Node 202 includes a base station controller (BSC) 204 with an associated tower station 206, a Packet Control Unit (PCU) 208 added for GPRS support in GSM, a Mobile Switching Center (MSC) 210, a Home Location Register (HLR) 212, a Visitor Location Registry (VLR) 214, a Serving GPRS Support Node (SGSN) 216, a Gateway GPRS Support Node (GGSN) 218, and a Dynamic Host Configuration Protocol (DHCP) 220. This list of components is not meant to be an exhaustive list of the components of every node 202 within a GSM/GPRS network, but rather serves as a list of components that are commonly used in communications through network 200, for ease of illustration.

In a GSM network, MSC 210 is coupled to BSC 204 and to a landline network, such as a Public Switched Telephone Network (PSTN) 222 to satisfy circuit switched requirements. The connection through PCU 208, SGSN 216 and GGSN 218 to the public or private network (Internet) 224 (also referred to herein generally as a shared network infrastructure) represents the data path for GPRS capable mobile devices. In a GSM network extended with GPRS capabilities, BSC 204 also contains a Packet Control Unit (PCU) 208 that connects to SGSN 216 to control segmentation, radio channel allocation and to satisfy packet switched requirements. To track mobile device location and availability for both circuit switched and packet switched management, HLR 212 is shared between MSC 210 and SGSN 216. Access to VLR 214 is controlled by MSC 210.

Station 206 comprises a fixed transceiver station. Station 206 and BSC 204 together form the fixed transceiver equipment. The fixed transceiver equipment provides wireless network coverage for a particular coverage area commonly referred to as a "cell". The fixed transceiver equipment transmits communication signals to and receives communication signals from mobile devices within its cell via station 206. The fixed transceiver equipment normally performs such functions as modulation and possibly encoding and/or encryption of signals to be transmitted to the mobile device in accordance with particular, usually predetermined, communication protocols and parameters, under control of its controller. The fixed transceiver equipment similarly demodulates and possibly decodes and decrypts, if necessary, any communication signals received from mobile device 100 within its cell. Communication protocols and parameters may vary between different nodes. For example, one node may employ a different modulation scheme and operate at different frequencies than other nodes.

For all mobile devices 100 registered with a specific network, permanent configuration data such as a user profile is stored in HLR 212. HLR 212 also contains location information for each registered mobile device and can be queried to determine the current location of a mobile device. MSC 210 is responsible for a group of location areas and stores the data of the mobile devices currently in its area of responsibility in VLR 214. Further VLR 214 also contains information on mobile devices that are visiting other networks. The information in VLR 214 includes part of the permanent mobile device data transmitted from HLR 212 to VLR 214 for faster access. By moving additional information from a remote HLR 212 node to VLR 214, the amount of traffic between these nodes can be reduced so that voice and data services can be provided with faster response times and at the same time requiring less use of computing resources.

SGSN 216 and GGSN 218 are elements added for GPRS support, namely, packet switched data support, within GSM. SGSN 216 and MSC 210 have similar responsibilities within wireless network 200 by keeping track of the location of each mobile device 100. SGSN 216 also performs security functions and access control for data traffic on network 200. GGSN 218 provides internetworking connections with external packet switched networks and connects to one or more SGSN's 216 via an Internet Protocol (IP) backbone network operated within the network 200. During normal operations, a given mobile device 100 performs a "GPRS Attach" to acquire an IP address and to access data services. This normally is not present in circuit switched voice channels as Integrated Services Digital Network (ISDN) addresses are used for routing incoming and outgoing calls. Currently, all GPRS capable networks use private, dynamically assigned IP addresses, thus requiring a DHCP server 220 connected to the GGSN 218. There are many mechanisms for dynamic IP assignment, including using a combination of a Remote Authentication Dial-In User Service (RADIUS) server and DHCP server. Once the GPRS Attach is complete, a logical connection is established from a mobile device 100, through PCU 208, and SGSN 216 to an Access Point Node (APN) within GGSN 218. The APN represents a logical end of an IP tunnel that can either access direct Internet compatible services or private network connections. The APN also represents a security mechanism for network 200, insofar as each mobile device 100 must be assigned to one or more APNs and mobile devices 100 cannot exchange data without first performing a GPRS Attach to an APN that it has been authorized to use. The APN may be considered to be similar to an Internet domain name such as "myconnection.wireless.com".

Once the GPRS Attach is complete, a tunnel is created and all traffic is exchanged within standard IP packets using any protocol that can be supported in IP packets. This includes tunneling methods such as IP over IP as in the case with some IPSecurity (IPsec) connections used with Virtual Private Networks (VPN). These tunnels are also referred to as Packet Data Protocol (PDP) Contexts and there are a limited number of these available in the network 200. To maximize use of the PDP Contexts, network 200 will run an idle timer for each PDP Context to determine if there is a lack of activity. When a mobile device 100 is not using its PDP Context, the PDP Context can be deallocated and the IP address returned to the IP address pool managed by DHCP server 220.

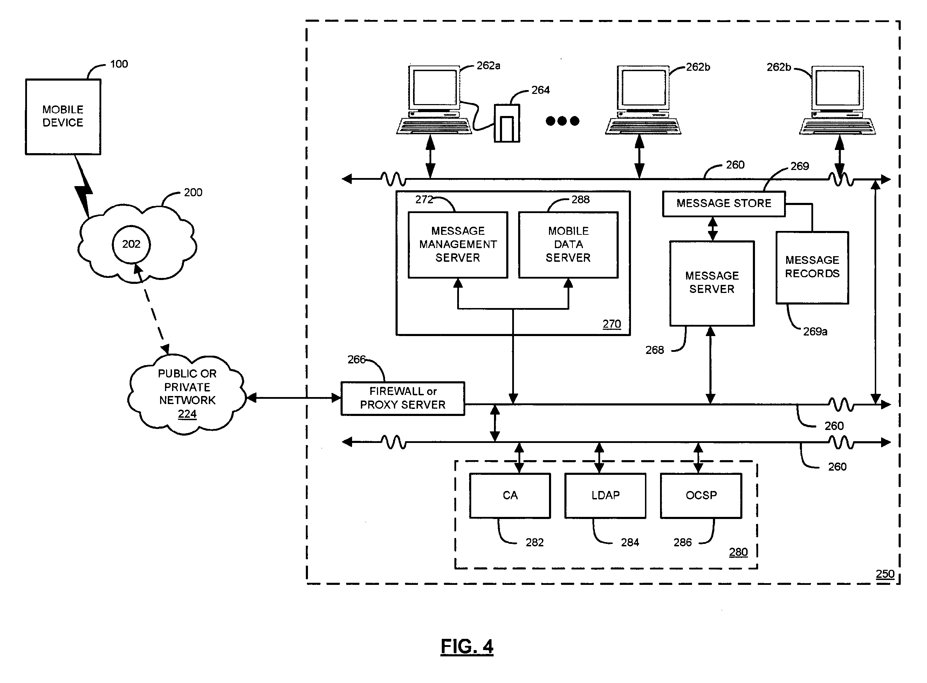

Referring now to FIG. 4, a block diagram illustrating components of a host system in one example configuration is shown. Host system 250 may typically be, for example, a corporate office or other local area network (LAN), or may instead be a home office computer or some other private system, for example, in variant implementations. As other examples, the host system 250 may comprise a LAN controlled by a governmental, healthcare, financial, or educational institution. In this example shown in FIG. 4, host system 250 is depicted as a LAN of an organization to which a user of mobile device 100 belongs.

LAN 250 comprises a number of network components connected to each other by LAN connections 260. For instance, a user's desktop computing device ("desktop computer") 262a, which may be connected to an accompanying cradle 264 for the user's mobile device 100, is situated on LAN 250. Cradle 264 for mobile device 100 may be coupled to computer 262a by a serial or a Universal Serial Bus (USB) connection, for example. Other user computers 262b are also situated on LAN 250, and each may or may not be equipped with an accompanying cradle 264 for a mobile device. Cradle 264 facilitates the loading of information (e.g. PIM data, private symmetric encryption keys to facilitate secure communications between mobile device 100 and LAN 250) from user computer 262a to mobile device 100, and may be particularly useful for bulk information updates often performed in initializing mobile device 100 for use. The information downloaded to mobile device 100 may include S/MIME certificates or PGP keys used in the exchange of messages. The process of downloading information from a user's desktop computer 262a to the user's mobile device 100 may also be referred to as synchronization.

It will be understood by persons skilled in the art that user computers 262a, 262b will typically be also connected to other peripheral devices not explicitly shown in FIG. 4. Furthermore, only a subset of network components of LAN 250 are shown in FIG. 4 for ease of exposition, and it will be understood by persons skilled in the art that LAN 250 will comprise additional components not explicitly shown in FIG. 4, for this example configuration. More generally, LAN 250 may represent a smaller part of a larger network [not shown] of the organization, and may comprise different components and/or be arranged in different topologies than that shown in the example of FIG. 4.

In this example, mobile device 100 communicates with LAN 250 through a node 202 of wireless network 200 and a shared network infrastructure 224 such as a service provider network or the public Internet. Access to LAN 250 may be provided through one or more routers [not shown], and computing devices of LAN 250 may operate from behind a firewall or proxy server 266.

In a variant implementation, LAN 250 comprises a wireless VPN router [not shown] to facilitate data exchange between the LAN 250 and mobile device 100. The concept of a wireless VPN router is new in the wireless industry and implies that a VPN connection can be established directly through a specific wireless network to mobile device 100. The possibility of using a wireless VPN router has only recently been available and could be used when the new Internet Protocol (IP) Version 6 (IPV6) arrives into IP-based wireless networks. This new protocol will provide enough IP addresses to dedicate an IP address to every mobile device, making it possible to push information to a mobile device at any time. An advantage of using a wireless VPN router is that it could be an off-the-shelf VPN component, not requiring a separate wireless gateway and separate wireless infrastructure to be used. A VPN connection may include, for example, a Transmission Control Protocol (TCP)/IP or User Datagram Protocol (UDP)/IP connection to deliver the messages directly to mobile device 100 in this variant implementation.

Messages intended for a user of mobile device 100 are initially received by a message server 268 of LAN 250. Such messages may originate from any of a number of sources. For instance, a message may have been sent by a sender from a computer 262b within LAN 250, from a different mobile device [not shown] connected to wireless network 200 or to a different wireless network, or from a different computing device or other device capable of sending messages, via the shared network infrastructure 224, and possibly through an application service provider (ASP) or Internet service provider (ISP), for example.

Message server 268 typically acts as the primary interface for the exchange of messages, particularly e-mail messages, within the organization and over the shared network infrastructure 224. Each user in the organization that has been set up to send and receive messages is typically associated with a user account managed by message server 268. One example of a message server 268 is a Microsoft Exchange™ Server. In some implementations, LAN 250 may comprise multiple message servers 268. Message server 268 may also be adapted to provide additional functions beyond message management, including the management of data associated with calendars and task lists, for example.

When messages are received by message server 268, they are typically stored in a message store 269, from which messages can be subsequently retrieved and delivered to users. For instance, an e-mail client application operating on a user's computer 262a may request the e-mail messages associated with that user's account stored on message server 268. These messages may then typically be retrieved from message server 268 and stored locally on computer 262a.

When operating mobile device 100, the user may wish to have e-mail messages retrieved for delivery to the handheld. An e-mail client application operating on mobile device 100 may also request messages associated with the user's account from message server 268. The e-mail client may be configured (either by the user or by an administrator, possibly in accordance with an organization's information technology (IT) policy) to make this request at the direction of the user, at some pre-defined time interval, or upon the occurrence of some pre-defined event. In some implementations, mobile device 100 is assigned its own e-mail address, and messages addressed specifically to mobile device 100 are automatically redirected to mobile device 100 as they are received by message server 268.

To facilitate the wireless communication of messages and message-related data between mobile device 100 and components of LAN 250, a number of wireless communications support components 270 may be provided. In this example implementation, wireless communications support components 270 comprise a message management server 272, for example. Message management server 272 is used to specifically provide support for the management of messages, such as e-mail messages, that are to be handled by mobile devices. Generally, while messages are still stored on message server 268, message management server 272 can be used to control when, if, and how messages should be sent to mobile device 100. Message management server 272 also facilitates the handling of messages composed on mobile device 100, which are sent to message server 268 for subsequent delivery.

As will be understood, the message store 269 effectively operates as a remote log storage (to which the mobile device 100 is operatively coupleable) for storing data records 269a corresponding to the various messages (including for example SMS, MMS, and PIN messages) sent from and received by the mobile device 100 (such message interaction included within the meaning of "auditable events" as used herein). Referring briefly to FIG. 1, a synchronization module 104a (which may, but does not necessarily, comprise part of the communication subsystem 104 of the mobile device 100) is programmed to periodically establish a wireless (often cellular) communication link between the mobile device 100 and the LAN 250 to upload or otherwise output the data records 127a from the data log 127 to the message log 269 which have not previously been uploaded, for completeness and to allow for auditing of the message data records, as will be understood. This process may include turning on the transmitter 152 and receiver 150 if they are shut down at the time to conserve power. The synchronization module 104a may flag or otherwise store marking data indicating the data records 127a which have been output or uploaded to the remote log 269.

The device 100 also includes a wipe application or deletion module, referred to generally as 140, programmed to delete or erase some or all user data 125 including the data log 127 and its data log records 127a. The wipe application 140 is configured to check the data log 127 to determine if any log data records 127a exist which have not been uploaded to the remote log storage 269. If any records 127a exist which have not been uploaded to the remote log storage 269, then the wipe application 140 is programmed to initiate an upload by the synchronization module 104a of any such data records 127a to the remote log storage 269. Once the remote log storage 269 is fully updated, the wipe application 140 is then free to delete any user data, including the data records 127a in the data log 127. As will be understood, the wipe application 140 may comprise a sub-module of another application, such as for example, the operating system.

Referring back to FIG. 4, the message management server 272 may for example: monitor the user's "mailbox" (e.g. the message store associated with the user's account on message server 268) for new e-mail messages; apply user-definable filters to new messages to determine if and how the messages will be relayed to the user's mobile device 100; compress and encrypt new messages (e.g. using an encryption technique such as Data Encryption Standard (DES) or Triple DES) and push them to mobile device 100 via the shared network infrastructure 224 and wireless network 200; and receive messages composed on mobile device 100 (e.g. encrypted using Triple DES), decrypt and decompress the composed messages, re-format the composed messages if desired so that they will appear to have originated from the user's computer 262a, and re-route the composed messages to message server 268 for delivery.

Certain properties or restrictions associated with messages that are to be sent from and/or received by mobile device 100 can be defined (e.g. by an administrator in accordance with IT policy) and enforced by message management server 272. These may include whether mobile device 100 may receive encrypted and/or signed messages, minimum encryption key sizes, whether outgoing messages must be encrypted and/or signed, and whether copies of all secure messages sent from mobile device 100 are to be sent to a pre-defined copy address, for example.

Message management server 272 may also be adapted to provide other control functions, such as only pushing certain message information or pre-defined portions (e.g. "blocks") of a message stored on message server 268 to mobile device 100. For example, when a message is initially retrieved by mobile device 100 from message server 268, message management server 272 is adapted to push only the first part of a message to mobile device 100, with the part being of a pre-defined size (e.g. 2 KB). The user can then request more of the message, to be delivered in similar-sized blocks by message management server 272 to mobile device 100, possibly up to a maximum pre-defined message size.

Accordingly, message management server 272 facilitates better control over the type of data and the amount of data that is communicated to mobile device 100, and can help to minimize potential waste of bandwidth or other resources.

It will be understood by persons skilled in the art that message management server 272 need not be implemented on a separate physical server in LAN 250 or other network. For example, some or all of the functions associated with message management server 272 may be integrated with message server 268, or some other server in LAN 250. Furthermore, LAN 250 may comprise multiple message management servers 272, particularly in variant implementations where a large number of mobile devices is supported.

Certificates may be used in the processing of encoded messages, such as e-mail messages, that are encrypted and/or signed, in accordance with certain secure messaging protocols. While Simple Mail Transfer Protocol (SMTP), RFC822 headers, and Multipurpose Internet Mail Extensions (MIME) body parts may be used to define the format of a typical e-mail message not requiring encoding, Secure/MIME (S/MIME), a version of the MIME protocol, may be used in the communication of encoded messages (i.e. in secure messaging applications). S/MIME enables end-to-end authentication and confidentiality, and provides data integrity and privacy from the time an originator of a message sends a message until it is decoded and read by the message recipient. Other standards and protocols may be employed to facilitate secure message communication, such as Pretty Good Privacy™ (PGP) and variants of PGP such as OpenPGP, for example. It will be understood that where reference is generally made to "PGP" herein, the term is intended to encompass any of a number of variant implementations based on the more general PGP scheme.

Secure messaging protocols such as S/MIME and PGP-based protocols rely on public and private encryption keys to provide confidentiality and integrity. Data encoded using a private key of a private key/public key pair can only be decoded using the corresponding public key of the pair, and data encoded using a public key of a private key/public key pair can only be decoded using the corresponding private key of the pair. It is intended that private key information never be made public, whereas public key information is shared.

For example, if a sender wishes to send a message to a recipient in encrypted form, the recipient's public key is used to encrypt a message, which can then be decrypted only using the recipient's private key. Alternatively, in some encoding techniques, a one-time session key is generated and used to encrypt the body of a message, typically with a symmetric encryption technique (e.g. Triple DES). The session key is then encrypted using the recipient's public key (e.g. with a public key encryption algorithm such as RSA), which can then be decrypted only using the recipient's private key. The decrypted session key can then be used to decrypt the message body. The message header may be used to specify the particular encryption scheme that must be used to decrypt the message. Other encryption techniques based on public key cryptography may be used in variant implementations. However, in each of these cases, only the recipient's private key may be used to facilitate successful decryption of the message, and in this way, the confidentiality of messages can be maintained.

As a further example, a sender may sign a message using a digital signature. A digital signature generally comprises a digest of the message (e.g. a hash of the message) encoded using the sender's private key, which can then be appended to the outgoing message. To verify the digital signature of the message when received, the recipient uses the same technique as the sender (e.g. using the same standard hash algorithm) to obtain a digest of the received message. The recipient also uses the sender's public key to decode the digital signature, in order to obtain what should be a matching digest for the received message. If the digests of the received message do not match, this suggests that either the message content was changed during transport and/or the message did not originate from the sender whose public key was used for verification. Digital signature algorithms are designed in such a way that only someone with knowledge of the sender's private key should be able to encode a signature that the recipient will decode correctly using the sender's public key. Therefore, by verifying a digital signature in this way, authentication of the sender and message integrity can be maintained.

An encoded message may be encrypted, signed, or both encrypted and signed. In S/MIME, the authenticity of public keys used in these operations is validated using certificates. A certificate is a digital document issued by a certificate authority (CA). Certificates are used to authenticate the association between users and their public keys, and essentially, provides a level of trust in the authenticity of the users' public keys. Certificates contain information about the certificate holder, with certificate contents typically formatted in accordance with an accepted standard (e.g. X.509). The certificates are typically digitally signed by the certificate authority.

In PGP-based systems, a PGP key is used, which is like an S/MIME certificate in that it contains public information including a public key and information on the key holder or owner. Unlike S/MIME certificates, however, PGP keys are not generally issued by a certificate authority, and the level of trust in the authenticity of a PGP key typically requires verifying that a trusted individual has vouched for the authenticity of a given PGP key.

For the purposes of the specification and in the claims, the term "certificate" is used generally to describe a construct used to provide public keys for encoding and decoding messages and possibly information on the key holder, and may be deemed to include what is generally known as a "PGP key" and other similar constructs.

Standard e-mail security protocols typically facilitate secure message transmission between non-mobile computing devices (e.g. computers 262a, 262b of FIG. 4; remote desktop devices). In order that signed messages received from senders may be read from mobile device 100 and that encrypted messages be sent from mobile device 100, mobile device 100 is adapted to store public keys (e.g. in S/MIME certificates, PGP keys) of other individuals. Keys stored on a user's computer 262a will typically be downloaded from computer 262a to mobile device 100 through cradle 264, for example.

Mobile device 100 may also be adapted to store the private key of the public key/private key pair associated with the user, so that the user of mobile device 100 can sign outgoing messages composed on mobile device 100, and decrypt messages sent to the user encrypted with the user's public key. The private key may be downloaded to mobile device 100 from the user's computer 262a through cradle 264, for example. The private key is preferably exchanged between the computer 262a and mobile device 100 so that the user may share one identity and one method for accessing messages.

User computers 262a, 262b can obtain S/MIME certificates and PGP keys from a number of sources, for storage on computers 262a, 262b and/or mobile devices (e.g. mobile device 100). These certificate sources may be private (e.g. dedicated for use within an organization) or public, may reside locally or remotely, and may be accessible from within an organization's private network or through the Internet, for example. In the example shown in FIG. 4, multiple public key infrastructure (PKI) servers 280 associated with the organization reside on LAN 250. PKI servers 280 include a CA server 282 that may be used for issuing S/MIME certificates, a Lightweight Directory Access Protocol (LDAP) server 284 that may be used to search for and download S/MIME certificates and/or PGP keys (e.g. for individuals within the organization), and an Online Certificate Status Protocol (OCSP) server 286 that may be used to verify the revocation status of S/MIME certificates, for example.

Certificates and/or PGP keys may be retrieved from LDAP server 284 by a user computer 262a, for example, to be downloaded to mobile device 100 via cradle 264. However, in a variant implementation, LDAP server 284 may be accessed directly (i.e. "over the air" in this context) by mobile device 100, and mobile device 100 may search for and retrieve individual certificates and PGP keys through a mobile data server 288. Similarly, mobile data server 288 may be adapted to allow mobile device 100 to directly query OCSP server 286 to verify the revocation status of S/MIME certificates.

In variant implementations, only selected PKI servers 280 may be made accessible to mobile devices (e.g. allowing certificates to be downloaded only from a user's computer 262a, 262b, while allowing the revocation status of certificates to be checked from mobile device 100).

In variant implementations, certain PKI servers 280 may be made accessible only to mobile devices registered to particular users, as specified by an IT administrator, possibly in accordance with an IT policy, for example.

Other sources of S/MIME certificates and PGP keys [not shown] may include a Windows certificate or key store, another secure certificate or key store on or outside LAN 250, and smart cards, for example.

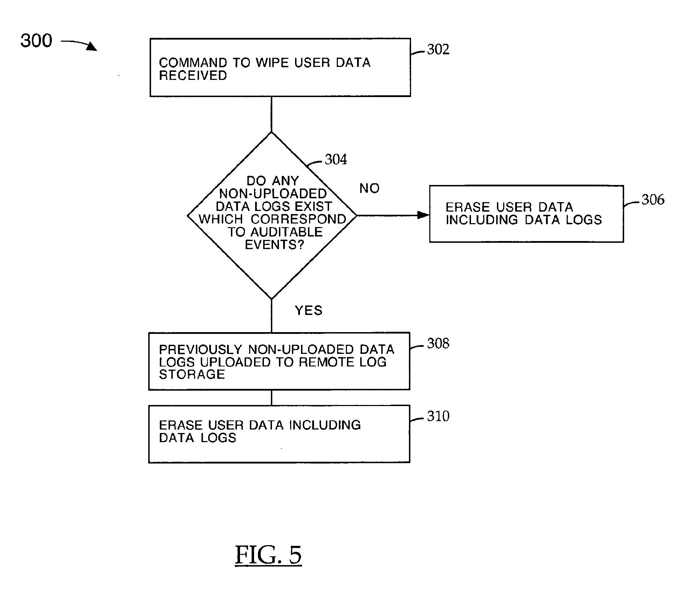

Further features of the above-mentioned example embodiments and features of other example embodiments will be apparent from the description that follows with reference to FIG. 5.

Referring now to FIG. 5, a flowchart illustrating a method for preserving data records of a system comprising a mobile electronic device and a remote log storage, is shown generally as 300. Additional details of some of the features described below in respect of the method 300 may be described earlier in the present specification.

In at least one embodiment, the method 300 is performed by the wipe application 140. The method is commenced by , by the wipe application 140 receiving a command, to erase user data stored on the electronic device 100 (Block 302).

Upon receipt of the erase command, the wipe application 140 determines if any data records 127a in the data log 127 exist which do not correspond to data records 269a in the remote log storage 269 (Block 304). If all data records 127a have been uploaded to the remote log storage 269, the wipe application 140 is programmed to proceed with deleting the user data stored on the device 100, including the data records 127a (Block 306).

However, if any data records 269a exist which have not been uploaded to the remote log storage 269, the previously non-uploaded data records 127a are uploaded to the remote log storage 269 (Block 308). To do so, the wipe application 140 causes the synchronization module 104a to upload any such data records 127a to the remote log storage 269. As noted previously, the synchronization module may establish a communication link between the mobile device and the LAN 250 (e.g. via a wireless link, such as via a cellular, BLUETOOTH® or Wi-Fi® link, or via a wireline link, such as via a USB cable, etc.) to upload data records 127a from the data log 127 to the message log records 269 which have not previously been uploaded, for completeness and to allow for auditing of the message data records, as will be understood. This process may include turning on the transmitter 152 and receiver 150 if they are shut down at the time to conserve power.

Once all of the data records 127a have been uploaded to the remote log storage 269, the wipe application 140 is programmed to proceed with deleting the user data stored on the device 100, including the data records 127a (Block 310).

It should be understood that the methods described herein may be provided as executable software instructions stored on computer-readable media, which may include transmission-type media.

The invention has been described with regard to a number of embodiments. However, it will be understood by persons skilled in the art that other variants and modifications may be made without departing from the scope of the invention as defined in the claims appended hereto.

## Claims

1. A method of a mobile electronic device for preserving data records of a data log of a system comprising a mobile electronic device (100) and a remote log storage means (269) configured to store data records (269a) corresponding to auditable events,
the mobile electronic device (100) comprising memory (126) configured to store user data (125);
the user data (125) comprising a data log (127) of data records (127a) corresponding to one or more auditable events; and
the mobile electronic device (100) being operatively coupleable to the remote log storage means (269),
the method performed at the mobile electronic device (100) comprising:
receiving a command to delete the user data (125) from a user;
upon receipt of the command from the user:
identifying any data records (127a) in the data log (127) which have not been uploaded to the remote log storage means (269);
turning on a transmitter and a receiver of the mobile electronic device if they are shut down;
uploading the identified data records (127a) to the remote log storage means (269) using the transmitter; and
deleting the user data (125).

2. The method as claimed in claim 1, further comprising the mobile electronic device (100) coupling to the remote log storage means (269) prior to storing the identified data records (127a) to the remote log storage means (269).

3. The method as claimed in claim 2, wherein operatively coupling comprises establishing a communication link between the mobile electronic device (100) and the remote log storage means (269).

4. The method as claimed in any one of claims 1 to 3, wherein the one or more auditable events comprise sending or receipt of a message.

5. A computer-readable medium (108) comprising instructions (140) executable on a processor (102) of a computing device (100) for causing said computing device (100) to implement all the steps of the method of any one of claims 1 to 4, when the instructions are run by the processor.

6. A mobile electronic device (100) comprising:
a communication module (104);
a memory (126) configured to store a data log (127);
a logging module (127b) operatively coupled to the communication module (104), wherein the logging module (127b) is configured to store, in the data log (127), data records (127a) corresponding to one or more auditable events;
wherein the communication module (104) is configured to output the data records (127a); and
a deletion module (140) configured to delete data records (127a) stored in the data log (127);
wherein the communication module (104) is configured to output the data records (127a) by storing the data records (127a) to a remote log storage means (269);
wherein the deletion module (140) is configured to:
upon receipt of a command, from a user, to delete user data comprising the data records:
determine if any data records (127a) exist which have not been uploaded to the remote log storage means (269);
cause a turning on of a transmitter and a receiver of the mobile electronic device if they are shut down ;
cause the non-uploaded data records to be uploaded to the remote log storage means using the transmitter; and
delete user data comprising the data records.

7. The mobile electronic device (100) as claimed in claim 6, wherein the data log (127) comprises the user data (125).

8. The mobile electronic system as claimed in any one of claims 6 to 7, wherein the communication module is configured to establish a communication link with the remote log storage means (269).

9. The mobile electronic device (100) as claimed in any one of claims 6 to 8, wherein the deletion module (140) is configured to determine if any data records (127a) exist which have not been output, prior to deleting any such data records (127a).

10. The mobile electronic device (100) as claimed in any one of claims 6 to 9, wherein the one or more auditable events comprise sending or receipt of a message.

## Patentansprüche

1. Verfahren einer elektronischen Mobilvorrichtung zum Bewahren von Dateneinträgen einer Datenerfassung eines Systems mit einer elektronischen Mobilvorrichtung (100) und fernen Erfassungsspeichermitteln (269), die dazu konfiguriert sind, Dateneinträge (269a) zu speichern, die prüfbaren Ereignissen entsprechen,
wobei die elektronische Mobilvorrichtung (100) einen Speicher (126) aufweist, der dazu konfiguriert ist, Benutzerdaten (125) zu speichern,
wobei die Benutzerdaten (125) eine Datenerfassung (127) von Dateneinträgen (127a) aufweisen, die einem oder mehreren prüfbaren Ereignissen entsprechen, und
wobei die elektronische Mobilvorrichtung (100) mit den fernen Erfassungsspeichermitteln (269) betrieblich koppelbar ist,
wobei das Verfahren an der elektronischen Mobilvorrichtung (100) durchgeführt wird, mit:
Erhalten eines Befehls, die Benutzerdaten (125) von einem Benutzer zu löschen,
nach Erhalt des Befehls von dem Benutzer:
Identifizieren etwaiger Dateneinträge (127a) in der Datenerfassung (127), welche nicht auf die fernen Erfassungsspeichermittel (269) hochgeladen worden sind,
Anschalten eines Senders und eines Empfängers der elektronischen Mobilvorrichtung, wenn sie abgeschaltet sind,
Hochladen der identifizierten Dateneinträge (127a) auf die fernen Erfassungsspeichermittel (269) unter Verwendung des Senders und
Löschen der Benutzerdaten (125).

2. Verfahren nach Anspruch 1, wobei ferner die elektronische Mobilvorrichtung (100) vor einem Speichern der identifizierten Dateneinträge (127a) auf den fernen Erfassungsspeichermitteln (269) sich mit den fernen Erfassungsspeichermitteln (269) koppelt.

3. Verfahren nach Anspruch 2, wobei das betriebliche Koppeln ein Herstellen einer Kommunikationsverbindung zwischen der elektronischen Mobilvorrichtung (100) und den fernen Erfassungsspeichermitteln (269) aufweist.

4. Verfahren nach einem der Ansprüche 1 bis 3, wobei das eine oder die mehreren prüfbaren Ereignisse ein Senden oder ein Empfangen einer Nachricht aufweisen.

5. Computerlesbares Medium (108) mit Anweisungen (140), die auf einem Prozessor (102) einer Computervorrichtung (100) durchführbar sind, zum Veranlassen der Computervorrichtung (100) alle Schritte des Verfahren nach einem der Ansprüche 1 bis 4 umzusetzen, wenn die Anweisungen von dem Prozessor ausgeführt werden.

6. Elektronische Mobilvorrichtung (100) mit:
einem Kommunikationsmodul (104),
einem Speicher (126), der dazu konfiguriert ist, eine Datenerfassung (127) zu speichern,
einem Erfassungsmodul (127b), das mit dem Kommunikationsmodul (104) betrieblich gekoppelt ist, wobei das Erfassungsmodul (127b) dazu konfiguriert ist, in der Datenerfassung (127) Dateneinträge (127a) zu speichern, die dem einen oder den mehreren Ereignissen entsprechen,
wobei das Kommunikationsmodul (104) dazu konfiguriert ist, die Dateneinträge (127a) auszugeben, und
einem Löschmodul (140), das dazu konfiguriert ist, Dateneinträge (127a) zu löschen, die in der Datenerfassung (127) gespeichert sind,
wobei das Kommunikationsmodul (104) dazu konfiguriert ist, die Dateneinträge (127a) durch Speichern der Dateneinträge (127a) an fernen Erfassungsspeichermitteln (269) auszugeben,
wobei das Löschmodul (140) dazu konfiguriert ist:
nach Erhalt eines Befehls von einem Benutzer, Benutzerdaten zu löschen, welche die Dateneinträge aufweisen:
zu bestimmen, ob irgendwelche Dateneinträge (127a) existieren, die nicht auf die fernen Erfassungsspeichermittel (269) hochgeladen worden sind,
ein Anschalten eines Senders und eines Empfängers der elektronischen Mobilvorrichtung zu veranlassen, wenn sie abgeschaltet sind,
die nicht hochgeladenen Dateneinträge zu veranlassen, unter Verwendung des Senders auf die fernen Erfassungsspeichermittel hochgeladen zu werden, und
Benutzerdaten zu löschen, welche die Dateneinträge aufweisen.

7. Elektronische Mobilvorrichtung (100) nach Anspruch 6, wobei die Datenerfassung (127) die Benutzerdaten (125) aufweist.

8. Elektronische Mobilvorrichtung nach Anspruch 6 oder 7, wobei das Kommunikationsmodul dazu konfiguriert ist, eine Kommunikationsverbindung mit den fernen Erfassungsspeichermitteln (269) herzustellen.

9. Elektronische Mobilvorrichtung (100) nach einem der Ansprüche 6 bis 8, wobei das Löschmodul (140) dazu konfiguriert ist, vor dem Löschen irgendwelcher Dateneinträge (127a), die nicht ausgegeben worden sind, zu bestimmen, ob irgendwelche solche Dateneinträge (127a) existieren.

10. Elektronische Mobilvorrichtung (100) nach einem der Ansprüche 6 bis 9, wobei das eine oder die mehreren prüfbaren Ereignisse ein Senden oder ein Empfangen einer Nachricht aufweisen.

## Revendications

1. Procédé d'un dispositif électronique mobile permettant de conserver des enregistrements de données d'un journal de données d'un système comprenant un dispositif électronique mobile (100) et un moyen de stockage de journal distant (269) configuré pour stocker des enregistrements de données (269a) correspondant à des événements vérifiables,
le dispositif électronique mobile (100) comprenant une mémoire (126) configurée pour stocker des données d'utilisateur (125) ;
les données d'utilisateur (125) comprenant un journal de données (127) d'enregistrements de données (127a) correspondant à un ou plusieurs événement(s) vérifiable(s) ; et
le dispositif électronique mobile (100) pouvant être couplé de manière fonctionnelle au moyen de stockage de journal distant (269),
le procédé effectué au niveau du dispositif électronique mobile (100) comprenant le fait :
de recevoir une commande pour supprimer les données d'utilisateur (125) provenant d'un utilisateur ;
lors de la réception de la commande provenant de l'utilisateur :
d'identifier tous les enregistrements de données (127a) dans le journal de données (127) qui n'ont pas été téléchargés vers l'amont vers le moyen de stockage de journal distant (269) ;
de mettre en marche un émetteur et un récepteur du dispositif électronique mobile s'ils sont éteints ;
de télécharger vers l'amont les enregistrements de données (127a) identifiés vers le moyen de stockage de journal distant (269) en utilisant l'émetteur ; et
de supprimer les données d'utilisateur (125).

2. Procédé tel que revendiqué dans la revendication 1, comprenant en outre le couplage du dispositif électronique mobile (100) au moyen de stockage de journal distant (269) avant le stockage des enregistrements de données identifiés (127a) dans le moyen de stockage de journal distant (269).

3. Procédé tel que revendiqué dans la revendication 2, dans lequel le couplage fonctionnel comprend le fait d'établir une liaison de communication entre le dispositif électronique mobile (100) et le moyen de stockage de journal distant (269).

4. Procédé tel que revendiqué dans l'une quelconque des revendications 1 à 3, dans lequel le ou les plusieurs événement(s) vérifiable(s) comprend/comprennent l'envoi ou la réception d'un message.

5. Support lisible par ordinateur (108) comprenant des instructions (140) pouvant être exécutées sur un processeur (102) d'un dispositif informatique (100) pour amener ledit dispositif informatique (100) à mettre en oeuvre toutes les étapes du procédé de l'une quelconque des revendications 1 à 4, lorsque les instructions sont exécutées par le processeur.

6. Dispositif électronique mobile (100) comprenant :
un module de communication (104) ;
une mémoire (126) configurée pour stocker un journal de données (127) ;
un module de journalisation (127b) couplé de manière fonctionnelle au module de communication (104), dans lequel le module de journalisation (127b) est configuré pour stocker, dans le journal de données (127), des enregistrements de données (127a) correspondant à un ou plusieurs événement(s) vérifiable(s) ;
dans lequel le module de communication (104) est configuré pour délivrer en sortie les enregistrements de données (127a) ; et
un module de suppression (140) configuré pour supprimer les enregistrements de données (127a) stockés dans le journal de données (127);
dans lequel le module de communication (104) est configuré pour délivrer en sortie les enregistrements de données (127a) en stockant les enregistrements de données (127a) dans un moyen de stockage de journal distant (269) ;
dans lequel le module de suppression (140) est configuré pour :
supprimer les données d'utilisateur comprenant les enregistrements de données, lors de la réception d'une commande, provenant d'un utilisateur :
déterminer s'il existe des enregistrements de données (127a) qui n'ont pas été téléchargés vers l'amont vers le moyen de stockage de journal distant (269) ;
provoquer une mise en marche d'un émetteur et d'un récepteur du dispositif électronique mobile s'ils sont éteints ;
provoquer le téléchargement vers l'amont vers le moyen de stockage de journal distant des enregistrements de données qui ne sont pas téléchargés vers l'amont en utilisant l'émetteur ; et
supprimer les données d'utilisateur comprenant les enregistrements de données.

7. Dispositif électronique mobile (100) tel que revendiqué dans la revendication 6, dans lequel le journal de données (127) comprend les données d'utilisateur (125).

8. Système électronique mobile tel que revendiqué dans l'une quelconque des revendications 6 et 7, dans lequel le module de communication est configuré pour établir une liaison de communication avec le moyen de stockage de journal distant (269).

9. Dispositif électronique mobile (100) tel que revendiqué dans l'une quelconque des revendications 6 à 8, dans lequel le module de suppression (140) est configuré pour déterminer s'il existe des enregistrements de données (127a) qui n'ont pas été délivrés en sortie, avant la suppression de l'un de ces enregistrements de données (127a).

10. Dispositif électronique mobile (100) tel que revendiqué dans l'une quelconque des revendications 6 à 9, dans lequel le ou les plusieurs événement(s) vérifiable(s) comprend/comprennent l'envoi ou la réception d'un message.
